# EUROPEAN PATENT APPLICATION

(11) **EP 4 556 862 A1**
(43) Date of publication of application: **21.05.2025**
(21) Application number: 24180930.0
(22) Date of filing: 07.06.2024
(51) Int. Cl.: G01D 11/30

(54) **SENSOR HAVING AN AUTOMATIC ALIGNMENT FIXING STRUCTURE**

(30) Priority: 17.11.2023 CN 202311544011
(71) Applicant: Xiamen PVTECH Co., Ltd., Xiamen, Fujian 361101 (CN)
(72) Inventor: HONG, Haibo, 361101 Xiamen, Fujian (CN); LU, Fuxing, 361101 Xiamen, Fujian (CN)
(74) Representative: Lang, Christian

(57) **Abstract**

A sensor (1) having an automatic alignment fixing structure includes a mounting cover (11), a sensor housing (12) and a sensor module (13). The mounting cover (11) has a fixing surface (FS) disposed on one side thereof, and having a first fixing arm (111) and a second fixing arm (112) not parallel to each other. The sensor housing (12) has a locking surface (LS) and a sensor mounting area (DS) disposed on the two sides thereof. The locking surface (LS) has a first locking arm (121) and a second locking arm (122) not parallel to each other, and corresponding to the first fixing arm (111) and the second fixing arm (112) respectively. The sensor module (13) is disposed on the sensor mounting area (DS). The first fixing arm (111) and the second fixing arm (112) are engaged with the first locking arm (121) and the second locking arm (122) respectively, whereby the mounting cover (11) is fixed with sensor housing (12).

## Description

### TECHNICAL FIELD

The present invention relates to a sensor, in particular to a sensor having an automatic alignment fixing structure.

### BACKGROUND

The currently available installation structures of sensors are relatively complex in design, leading to a significant increase in the overall cost of these sensors and imposing significant limitations on the applications of these sensor.

Furthermore, due to the complex design of the currently available sensor installation structures, users also face challenges in quickly and conveniently installing these sensors, often requiring the assistance of technicians. As a result, the current use of currently available sensors is inconvenient and fails to meet the needs of users.

Moreover, due to structural limitations of the currently available sensors, these sensors typically offer only one sensing function. Consequently, if users wish to implement a different sensing application, they must remove the current sensors and install sensors with the desired sensing functions.

### SUMMARY

One embodiment of the present invention provides a sensor having an automatic alignment fixing structure, which includes a mounting cover, a sensor housing and a sensor module. The mounting cover has a fixing surface disposed on one side thereof, and having a first fixing arm and a second fixing arm not parallel to each other. The sensor housing has a locking surface and a sensor mounting area disposed on the two sides thereof. The locking surface has a first locking arm and a second locking arm not parallel to each other, and corresponding to the first fixing arm and the second fixing arm respectively. The sensor module is disposed on the sensor mounting area. The first fixing arm and the second fixing arm are engaged with the first locking arm and the second locking arm respectively, whereby the mounting cover is fixed with sensor housing.

In one embodiment, there is a first included angle between a first reference line and a second reference line. The first reference line passes through the first fixing arm and the central axis of the connecting surface of the fixing surface. The second reference line passes through the second fixing arm and the central axis of the connecting surface of the fixing surface.

In one embodiment, there is a second included angle between a third reference line and a fourth reference line. The third reference line passes through the first locking arm and the central axis of the connecting surface of the locking surface. The fourth reference line passes through the second locking arm and the central axis of the connecting surface of the locking surface. The first included angle is substantially equal to the second included angle.

In one embodiment, the first included angle and the second included angle are less than 90°.

In one embodiment, the first included angle and the second included angle are greater than 90° and less than 180°.

In one embodiment, the cross-sections of the first fixing arm, the second fixing arm, the first locking arm, and the second locking arm are L-shaped.

In one embodiment, the first fixing arm has a first extending portion connected to the fixing surface and a first fixing portion connected to the first extending portion. The second fixing arm has a second extending portion connected to the fixing surface and a second fixing portion connected to the second extending portion. The first fixing portion and the second fixing portion extend along the direction toward the central axis of the fixing surface.

In one embodiment, the first locking arm has a first support portion connected to the locking surface and a first locking portion connected to the first support portion. The second locking arm has a second support portion connected to the locking surface and a second locking portion connected to the second support portion. The extending direction of the first locking portion is opposite to the extending direction of the second locking portion.

In one embodiment, the first support portion has a positioning hole and a positioning post disposed in the positioning hole. The positioning post has a positioning block and an extending direction of the positioning block is equal to the extending direction of the first locking portion. The first fixing portion has a positioning recess corresponding to the positioning block.

In one embodiment, the sensor further includes a cover plate disposed on the sensor mounting area to cover the sensor mounting area.

The sensor having the automatic alignment fixing structure in accordance with the embodiments of the present invention may have the following advantages:
(1) In one embodiment of the present invention, the sensor includes a mounting cover, a sensor housing and a sensor module. The mounting cover has a fixing surface disposed on one side thereof, and has a first fixing arm and a second fixing arm not parallel to each other. The sensor housing has a locking surface and a sensor mounting area disposed on the two sides thereof. The locking surface has a first locking arm and a second locking arm not parallel to each other, and corresponding to the first and second fixing arms. The sensor module is disposed on the sensor mounting area. The first and second fixing arms are engaged with the first and second locking arms respectively so as to fix the mounting cover with the sensor housing. Therefore, the structural design of the fixing surface of the mounting cover and the locking surface of the sensor housing can form an automatic alignment structure, so the user can quickly and conveniently install the sensor. As a result, the sensor can be more convenient in use so as to meeting the requirements of the user.
(2) In one embodiment of the present invention, the fixing surface of the mounting cover of the sensor has a first fixing arm. The first fixing arm includes a first extending portion and a first fixing portion, and the first fixing portion has a positioning recess. The locking surface of the sensor housing has a first support portion having a positioning hole and a positioning post. The positioning post is disposed in the positioning hole and has a positioning block corresponding to the positioning recess. Via this automatic auxiliary positioning structure, the mounting cover and the sensor housing can be stably fixed with each other so as to provide sufficient structural strength, such that the overall stability of the sensor can be enhanced.
(3) In one embodiment of the present invention, the positioning post of the above automatic auxiliary positioning structure is disposed in the positioning hole of the first support portion. Therefore, when the first and second fixing arms have not been engaged with the first and second locking arms, the positioning post is deformed to create a certain resistance for the user holding the sensor housing. When the first and second fixing arms are engaged with the first and second locking arms, and the positioning block of the positioning post is embedded in the positioning recess of the first fixing portion, the user can clearly feel the disappearance of the aforementioned resistance. Thus, the automatic auxiliary positioning structure provides a foolproof function, so the user can quickly and conveniently install the sensor without the assistance of technicians. In this way, the sensor can satisfy actual requirements.
(4) In one embodiment of the present invention, the sensor has an automatic alignment fixing structure, so the sensor housing can be detachably connected to the mounting cover. In this way, the user can replace the sensor housing with another sensing module having different sensing function according to actual requirements. Therefore, the sensor can provide another sensing function, so the sensor can be more comprehensive in application so as to meet the requirements of different applications.
(5) In one embodiment of the present invention, the design of the sensor is simple, so the sensor can achieve the desired technical effects while reducing the cost thereof. Consequently, the practicality of the sensor can be effectively enhanced in order to solve the shortcomings of prior art and conform to future development trends.

Further scope of applicability of the present application will become more apparent from the detailed description given hereinafter. However, it should be understood that the detailed description and specific examples, while indicating exemplary embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is an exploded view of a sensor having an automatic alignment fixing structure in accordance with one embodiment of the present invention.
FIG. 2 is a perspective view of the sensor having the automatic alignment fixing structure in accordance with one embodiment of the present invention.
FIG. 3 is a schematic view of a structure of the sensor having the automatic alignment fixing structure in accordance with one embodiment of the present invention.
FIG. 4 is a first partial enlargement view of the sensor having the automatic alignment fixing structure in accordance with one embodiment of the present invention.
FIG. 5 is a second partial enlargement view of the sensor having the automatic alignment fixing structure in accordance with one embodiment of the present invention.
FIG. 6 is a third partial enlargement view of the sensor having the automatic alignment fixing structure in accordance with one embodiment of the present invention.
FIG. 7 is a schematic view of the sensor having the automatic alignment fixing structure in operation in accordance with one embodiment of the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. It should be understood that, when it is described that an element is "coupled" or "connected" to another element, the element may be "directly coupled" or "directly connected" to the other element or "coupled" or "connected" to the other element through a third element. In contrast, it should be understood that, when it is described that an element is "directly coupled" or "directly connected" to another element, there are no intervening elements.

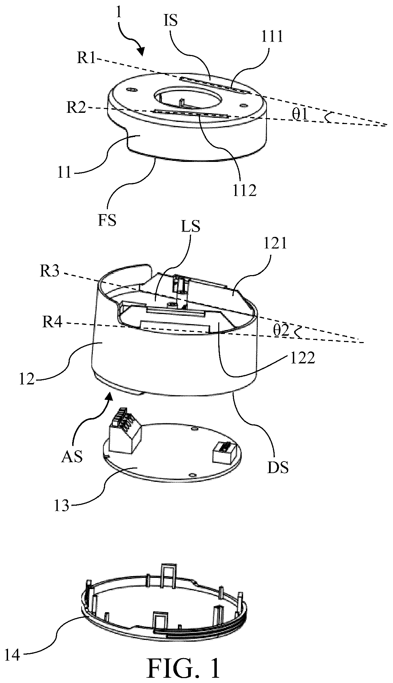

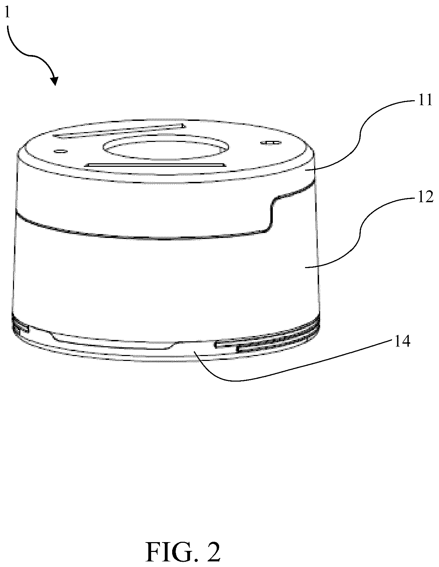

Please refer to FIG. 1 and FIG. 2. FIG. 1 is an exploded view of a sensor having an automatic alignment fixing structure in accordance with one embodiment of the present invention. FIG. 2 is a perspective view of the sensor having the automatic alignment fixing structure in accordance with one embodiment of the present invention. As shown in FIG. 1 and FIG. 2, the sensor 1 includes a mounting cover 11, a sensor housing 12, a sensor module 13, and a cover plate 14. In this embodiment, the sensor 1 can be an alternating-current (AC) sensor. In another embodiment, the sensor 1 can also be a direct-current (DC) sensor.

The mounting cover 11 has a mounting surface IS and a fixing surface FS disposed on the two sides of the mounting cover 11. The mounting surface IS can be fixed on the ceiling, wall, or other appropriate positions of a building. The fixing surface FS has a first fixing arm 111 and a second fixing arm 112, which are not parallel to each other. The first fixing arm 111 and the second fixing arm 112 can form a first included angle θ1 between the first reference line R1 and the second reference line R2. The first reference line R1 passes through the first fixing arm 111 and the central axis of the connecting surface of the fixing surface FS. The second reference line R2 passes through the second fixing arm 112 and the central axis of the connecting surface of the fixing surface FS. In this embodiment, the first included angle θ1 can be an acute angle; that is to say, the first included angle θ1 may be less than 90°. In another embodiment, the first included angle θ1can be an obtuse angle; that is to say, the first included angle θ1 may be greater than 90° and less than 180°.

The sensor housing 12 has a locking surface LS and a sensor mounting area DS disposed on the two sides of the sensor housing 12. The locking surface LS has a first locking arm 121 and a second locking arm 122. The first locking arm 121 and the second locking arm 122 are not parallel to each other, and corresponding to the first fixing arm 111 and the second fixing arm 112, respectively. There is a second included angle θ2 between a third reference line R3 and a fourth reference line R4. The third reference line R3 passes through the first locking arm 121 and the central axis of the connecting surface of the locking surface LS. The fourth reference line R4 passes through the second locking arm 122 and the central axis of the connecting surface of the locking surface LS. The first included angle θ1 is substantially equal to the second included angle θ2. In this embodiment, the second included angle θ2 can be an acute angle; that is to say, the second included angle θ2 may be less than 90°. In another embodiment, the second included angle θ2can be an obtuse angle; that is to say, the second included angle θ2 may be greater than 90° and less than 180°.

The sensor module 13 is disposed on the sensor mounting area DS of the sensor housing 12. The sensor mounting area DS has an accommodating space AS, and the sensor housing 12 is disposed in the accommodating space AS. The cover plate 14 is disposed on the sensor mounting area DS to cover the sensor mounting area DS. In one embodiment, the sensor module 13 can be a microwave sensor. In another embodiment, the sensor module 13 may also include an infrared sensor, a light sensor, a smoke sensor, or other similar components.

The first fixing arm 111 and the second fixing arm 112 of the fixing surface FS of the mounting cover 11 are respectively engaged with the first locking arm 121 and the second locking arm 122 of the locking surfaces LS of the sensor housing 12. Thus, the mounting cover 11 can be fixed with the sensor housing 12.

The fixing surface FS of the mounting cover 11 has the first fixing arm 111 and the second fixing arm 112, forming the first included angle θ1 between them. The locking surfaces LS of the sensor housing 12 have the first locking arm 121 and the second locking arm 122, forming the second included angle θ2 between them. Therefore, the structural design of the fixing surface FS on the mounting cover 11 and the locking surfaces LS on the sensor housing 12 can form an automatic alignment structure. Therefore, the user can intuitively align the front ends of the first locking arm 121 and the second locking arm 122 (the distance between these two ends is relatively short) with the rear ends of the first fixing arm 111 and the second fixing arm 112 (the distance between these two ends is relatively long), and move the sensor housing 12 toward the mounting cover 11 to securely fix the sensor housing 12 to the mounting cover 11. In this way, the user can quickly and conveniently install the sensor 1. Therefore, the sensor 1 can be more convenient in use in order to meet the requirements of the user.

The embodiment just exemplifies the present invention and is not intended to limit the scope of the present invention; any equivalent modification and variation according to the spirit of the present invention is to be also included within the scope of the following claims and their equivalents.

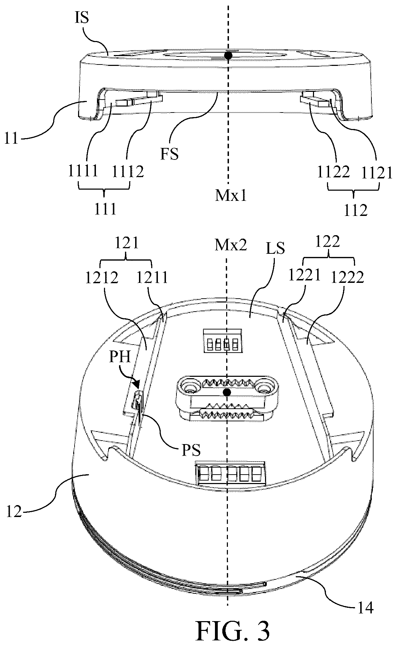

Refer to FIG. 3, which is a schematic view of a structure of the sensor having the automatic alignment fixing structure in accordance with one embodiment of the present invention. As shown in FIG. 3, the first fixing arm 111 has a first extending portion 1111 and a first fixing portion 1112. The first extending portion 1111 is connected to the fixing surface FS, and the first fixing portion 1112 is connected to the first extending portion 1111, such that the cross-section of the first fixing arm 111 is L-shaped. Similarly, the second fixing arm 112 has a second extending portion 1121 and a second fixing portion 1122. The second extending portion 1121 is connected to the fixing surface FS, and the second fixing portion 1122 is connected to the second extending portion 1121, such that the cross-section of the second fixing arm 112 is also L-shaped. The first fixing portion 1112 extends in the direction toward the central axis Mx1 of the fixing surface FS. The second fixing portion 1122 also extends in the direction toward the central axis Mx1 of the fixing surface FS. Therefore, the extending direction of the first fixing portion 1112 is opposite to the extending direction of the second fixing portion 1122.

The first locking arm 121 has a first support portion 1211 and a first locking portion 1212. The first support portion 1211 is connected to the locking surface LS, and the first locking portion 1212 is connected to the first support portion 1211, such that the cross-section of the first locking arm 121 is L-shaped. Similarly, the second locking arm 122 has a second support portion 1221 and a second locking portion 1222. The second support portion 1221 is connected to the locking surface LS, and the second locking portion 1222 is connected to the second support portion 1221, such that the cross-section of the second locking arm 122 is L-shaped. The first locking portion 1212 extends in the direction away from the central axis Mx2 of the locking surface LS. The second locking portion 1222 also extends in the direction away from the central axis Mx2 of the locking surface LS. Therefore, the extending direction of the first locking portion 1212 is opposite to the extending direction of the second locking portion 1222.

With the above-described structural design, the first fixing arm 111 and the second fixing arm 112 are respectively engaged with the first locking arm 121 and the second locking arm 122 in order to fix the mounting cover 11 with the sensor housing 12. Therefore, the structural design of the fixing surface FS of the mounting cover 11 and the locking surface LS of the sensor housing 12 can form an automatic alignment structure, so the user can quickly and conveniently install the sensor 1. As a result, the sensor 1 is more convenient in use, so the sensor 1 can meet the needs of the user.

The embodiment just exemplifies the present invention and is not intended to limit the scope of the present invention; any equivalent modification and variation according to the spirit of the present invention is to be also included within the scope of the following claims and their equivalents.

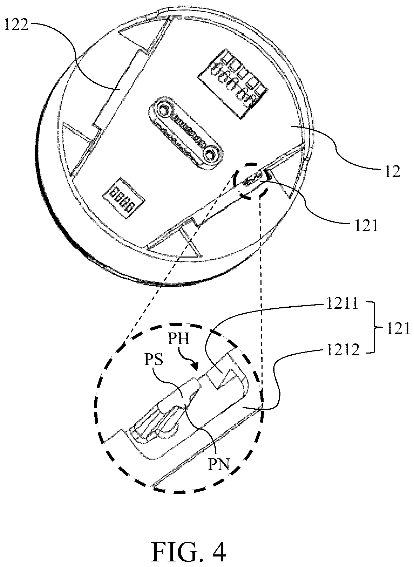

Refer to FIG. 4, FIG. 5, and FIG. 6, which are a first partial enlargement view, a second partial enlargement view, and the third partial enlargement view of the sensor having the automatic alignment fixing structure according to one embodiment of the present invention. As shown in FIG. 4, the first support portion 1211 of the first locking arm 121 has a positioning hole PH and a positioning post PS. The positioning post PS is disposed in the positioning hole PH. The positioning post PS has a positioning block PN. The extending direction of the positioning block PN is the same as the extending direction of the first locking portion 1212.

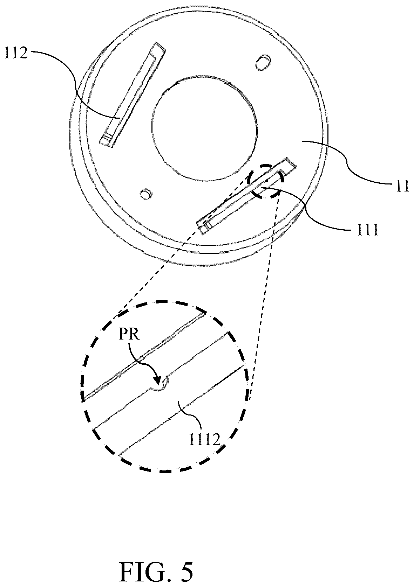

As shown in FIG. 5, the first fixing portion 1112 of the first fixing arm 111 has a positioning recess PR corresponding to the positioning block PN.

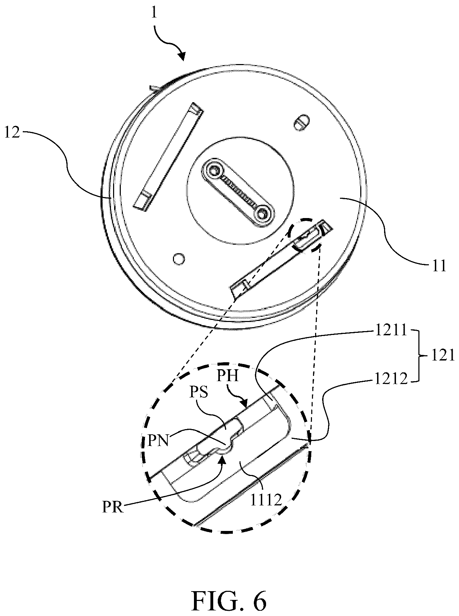

As shown in FIG. 6, when the user holds the sensor housing 12 and moves the sensor housing 12 toward the mounting cover 11, the first fixing arm 111 and the second fixing arm 112 have not been engaged with the first locking arm 121 and the second locking arm 122 yet. At this time, the positioning post PS deforms, causing the user's grip on the sensor housing 12 to feel a certain resistance.

When the first fixing arm 111 and the second fixing arm 112 are engaged with the first locking arm 121 and the second locking arm 122, and the positioning block PN of the positioning post PS is embedded in the positioning recess PR of the first fixing portion 1112, the user can clearly feel the disappearance of the resistance. Therefore, the user can clearly feel that the installation is completed. Through the aforementioned automatic auxiliary alignment structure, the mounting cover 11 and the sensor housing 12 can be securely fixed with each other, and the overall structural stability of the sensor 1 can be improved.

In addition, the positioning post PS of the automatic auxiliary alignment structure described above is disposed in the positioning hole PH of the first support portion 1211. Therefore, when the first fixing arm 111 and the second fixing arm 112 have not been engaged with the first locking arm 121 and the second locking arm 122 yet, the positioning post PS deforms, causing the user's grip on the sensor housing 12 to feel a certain resistance. When the first fixing arm 111 and the second fixing arm 112 are engaged with the first locking arm 121 and the second locking arm 122, and the positioning block PN of the positioning post PS is embedded in the positioning recess PR of the first fixing portion 1112, the user can clearly feel the disappearance of the resistance. Therefore, the above-described automatic auxiliary alignment structure can also provide foolproof function, so the user can quickly and conveniently install the sensor 1 without the assistance of technicians. Thus, the sensor 1 can conform to actual requirements.

The embodiment just exemplifies the present invention and is not intended to limit the scope of the present invention; any equivalent modification and variation according to the spirit of the present invention is to be also included within the scope of the following claims and their equivalents.

It is worthy to point out that the currently available installation structures of sensors are relatively complex in design, leading to a significant increase in the overall cost of these sensors and imposing significant limitations on the applications of these sensor. Furthermore, due to the complex design of the currently available sensor installation structures, users also face challenges in quickly and conveniently installing these sensors, often requiring the assistance of technicians. As a result, the current use of currently available sensors is inconvenient and fails to meet the needs of users. Moreover, due to structural limitations of the currently available sensors, these sensors typically offer only one sensing function. Consequently, if users wish to implement a different sensing application, they must remove the current sensors and install sensors with the desired sensing functions. By contrast, according to one embodiment of the present invention, the sensor includes a mounting cover, a sensor housing and a sensor module. The mounting cover has a fixing surface disposed on one side thereof, and has a first fixing arm and a second fixing arm not parallel to each other. The sensor housing has a locking surface and a sensor mounting area disposed on the two sides thereof. The locking surface has a first locking arm and a second locking arm not parallel to each other, and corresponding to the first and second fixing arms. The sensor module is disposed on the sensor mounting area. The first and second fixing arms are engaged with the first and second locking arms respectively so as to fix the mounting cover with the sensor housing. Therefore, the structural design of the fixing surface of the mounting cover and the locking surface of the sensor housing can form an automatic alignment structure, so the user can quickly and conveniently install the sensor. As a result, the sensor can be more convenient in use so as to meeting the requirements of the user.

Also, according to one embodiment of the present invention, the fixing surface of the mounting cover of the sensor has a first fixing arm. The first fixing arm includes a first extending portion and a first fixing portion, and the first fixing portion has a positioning recess. The locking surface of the sensor housing has a first support portion having a positioning hole and a positioning post. The positioning post is disposed in the positioning hole and has a positioning block corresponding to the positioning recess. Via this automatic auxiliary positioning structure, the mounting cover and the sensor housing can be stably fixed with each other so as to provide sufficient structural strength, such that the overall stability of the sensor can be enhanced.

Further, according to one embodiment of the present invention, the positioning post of the above automatic auxiliary positioning structure is disposed in the positioning hole of the first support portion. Therefore, when the first and second fixing arms have not been engaged with the first and second locking arms, the positioning post is deformed to create a certain resistance for the user holding the sensor housing. When the first and second fixing arms are engaged with the first and second locking arms, and the positioning block of the positioning post is embedded in the positioning recess of the first fixing portion, the user can clearly feel the disappearance of the aforementioned resistance. Thus, the automatic auxiliary positioning structure provides a foolproof function, so the user can quickly and conveniently install the sensor without the assistance of technicians. In this way, the sensor can satisfy actual requirements.

Moreover, according to one embodiment of the present invention, the sensor has an automatic alignment fixing structure, so the sensor housing can be detachably connected to the mounting cover. In this way, the user can replace the sensor housing with another sensing module having different sensing function according to actual requirements. Therefore, the sensor can provide another sensing function, so the sensor can be more comprehensive in application so as to meet the requirements of different applications.

Furthermore, according to one embodiment of the present invention, the design of the sensor is simple, so the sensor can achieve the desired technical effects while reducing the cost thereof. Consequently, the practicality of the sensor can be effectively enhanced in order to solve the shortcomings of prior art and conform to future development trends. As set forth above, the sensor having the automatic alignment fixing structure according to the embodiments of the present invention can definitely achieve great technical effects.

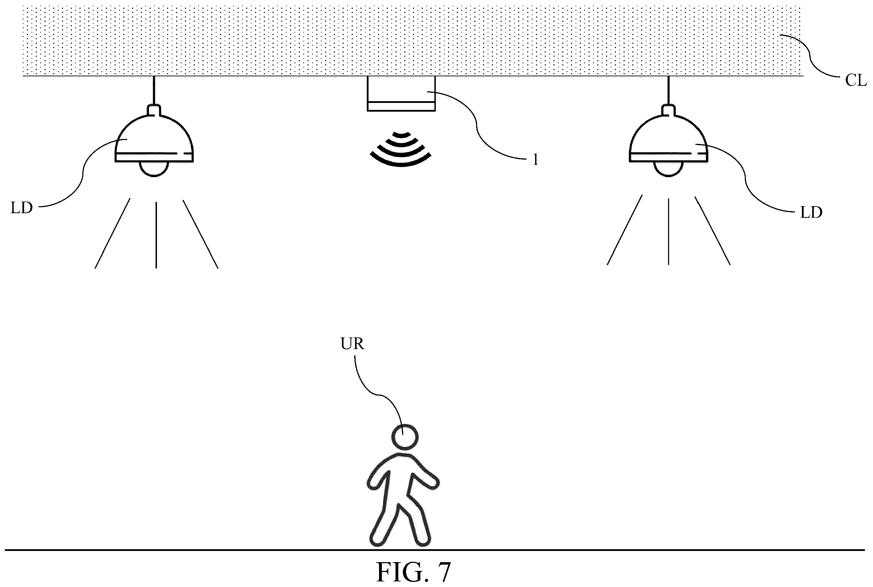

Please refer to FIG. 7, which is a schematic view of the sensor having the automatic alignment fixing structure in operation in accordance with one embodiment of the present invention. As shown in FIG. 7, the sensor 1 in this embodiment is an infrared sensor, which can be fixed to the ceiling CL of a building (the sensor 1 can also be fixed to the wall or other suitable locations of the building). When the sensor 1 detects a user UR, the sensor 1 can transmit a detection signal to several lighting devices LD to turn on these lighting devices LD.

The user can replace the sensor housing 12 with different sensor modules 13 that have different sensing functions according to the actual requirements, such that the sensor 1 can provide another sensing function. Therefore, the sensor 1 can be more comprehensive in application and meet the requirements of different applications.

Due to the simple design of the sensor 1, the sensor 1 can achieve the desired technical effects while reducing the cost thereof. In this way, the practicality of the sensor 1 can be effectively enhanced. Therefore, the sensor 1 can not only effectively improve the drawbacks of prior art but also align with future development trends.

The embodiment just exemplifies the present invention and is not intended to limit the scope of the present invention; any equivalent modification and variation according to the spirit of the present invention is to be also included within the scope of the following claims and their equivalents.

To sum up, according to one embodiment of the present invention, the sensor includes a mounting cover, a sensor housing and a sensor module. The mounting cover has a fixing surface disposed on one side thereof, and has a first fixing arm and a second fixing arm not parallel to each other. The sensor housing has a locking surface and a sensor mounting area disposed on the two sides thereof. The locking surface has a first locking arm and a second locking arm not parallel to each other, and corresponding to the first and second fixing arms. The sensor module is disposed on the sensor mounting area. The first and second fixing arms are engaged with the first and second locking arms respectively so as to fix the mounting cover with the sensor housing. Therefore, the structural design of the fixing surface of the mounting cover and the locking surface of the sensor housing can form an automatic alignment structure, so the user can quickly and conveniently install the sensor. As a result, the sensor can be more convenient in use so as to meeting the requirements of the user.

Also, according to one embodiment of the present invention, the fixing surface of the mounting cover of the sensor has a first fixing arm. The first fixing arm includes a first extending portion and a first fixing portion, and the first fixing portion has a positioning recess. The locking surface of the sensor housing has a first support portion having a positioning hole and a positioning post. The positioning post is disposed in the positioning hole and has a positioning block corresponding to the positioning recess. Via this automatic auxiliary positioning structure, the mounting cover and the sensor housing can be stably fixed with each other so as to provide sufficient structural strength, such that the overall stability of the sensor can be enhanced.

Further, according to one embodiment of the present invention, the positioning post of the above automatic auxiliary positioning structure is disposed in the positioning hole of the first support portion. Therefore, when the first and second fixing arms have not been engaged with the first and second locking arms, the positioning post is deformed to create a certain resistance for the user holding the sensor housing. When the first and second fixing arms are engaged with the first and second locking arms, and the positioning block of the positioning post is embedded in the positioning recess of the first fixing portion, the user can clearly feel the disappearance of the aforementioned resistance. Thus, the automatic auxiliary positioning structure provides a foolproof function, so the user can quickly and conveniently install the sensor without the assistance of technicians. In this way, the sensor can satisfy actual requirements.

Moreover, according to one embodiment of the present invention, the sensor has an automatic alignment fixing structure, so the sensor housing can be detachably connected to the mounting cover. In this way, the user can replace the sensor housing with another sensing module having different sensing function according to actual requirements. Therefore, the sensor can provide another sensing function, so the sensor can be more comprehensive in application so as to meet the requirements of different applications.

Furthermore, according to one embodiment of the present invention, the design of the sensor is simple, so the sensor can achieve the desired technical effects while reducing the cost thereof. Consequently, the practicality of the sensor can be effectively enhanced in order to solve the shortcomings of prior art and conform to future development trends.

It will be apparent to those skilled in the art that various modifications and variations can be made to the disclosed embodiments. It is intended that the specification and examples be considered as exemplary only, with a true scope of the present invention being indicated by the following claims and their equivalents.

## Claims

1. A sensor having an automatic alignment fixing structure, **characterized by** comprising:
a mounting cover having a fixing surface disposed on one side thereof, and having a first fixing arm and a second fixing arm not parallel to each other;
a sensor housing having a locking surface and a sensor mounting area disposed on two sides thereof, wherein the locking surface has a first locking arm and a second locking arm not parallel to each other, and corresponding to the first fixing arm and the second fixing arm respectively; and
a sensor module disposed on the sensor mounting area;
wherein the first fixing arm and the second fixing arm are engaged with the first locking arm and the second locking arm respectively, whereby the mounting cover is fixed with sensor housing.

2. The sensor having the automatic alignment fixing structure as claimed in claim 1, **characterized in that** there is a first included angle between a first reference line and a second reference line, wherein the first reference line passes through the first fixing arm and a central axis of a connecting surface of the fixing surface, and the second reference line passes through the second fixing arm and the central axis of the connecting surface of the fixing surface.

3. The sensor having the automatic alignment fixing structure as claimed in claim 2, **characterized in that** there is a second included angle between a third reference line and a fourth reference line, wherein the third reference line passes through the first locking arm and a central axis of a connecting surface of the locking surface, and the fourth reference line passes through the second locking arm and the central axis of the connecting surface of the locking surface, wherein the first included angle is substantially equal to the second included angle.

4. The sensor having the automatic alignment fixing structure as claimed in claim 3, **characterized in that** the first included angle and the second included angle are less than 90°.

5. The sensor having the automatic alignment fixing structure as claimed in claim 3, **characterized in that** the first included angle and the second included angle are greater than 90° and less than 180°.

6. The sensor having the automatic alignment fixing structure as claimed in claim 1, **characterized in that** cross-sections of the first fixing arm, the second fixing arm, the first locking arm, and the second locking arm are L-shaped.

7. The sensor having the automatic alignment fixing structure as claimed in claim 1, **characterized in that** the first fixing arm has a first extending portion connected to the fixing surface and a first fixing portion connected to the first extending portion, wherein the second fixing arm has a second extending portion connected to the fixing surface and a second fixing portion connected to the second extending portion, wherein the first fixing portion and the second fixing portion extend along a direction toward a central axis of the fixing surface.

8. The sensor having the automatic alignment fixing structure as claimed in claim 7, **characterized in that** the first locking arm has a first support portion connected to the locking surface and a first locking portion connected to the first support portion, wherein the second locking arm has a second support portion connected to the locking surface and a second locking portion connected to the second support portion, wherein an extending direction of the first locking portion is opposite to an extending direction of the second locking portion.

9. The sensor having the automatic alignment fixing structure as claimed in claim 8, **characterized in that** the first support portion has a positioning hole and a positioning post disposed in the positioning hole, wherein the positioning post has a positioning block and an extending direction of the positioning block is equal to the extending direction of the first locking portion, wherein the first fixing portion has a positioning recess corresponding to the positioning block.

10. The sensor having the automatic alignment fixing structure as claimed in claim 1, **characterized by** further comprising a cover plate disposed on the sensor mounting area to cover the sensor mounting area.
